Europäisches Patentamt

European Patent Office

Office européen des brevets

(11) Veröffentlichungsnummer: **0 220 672**
**A1**

(12) **EUROPÄISCHE PATENTANMELDUNG**

(21) Anmeldenummer: **86114646.2**

(22) Anmeldetag: **22.10.86**

(51) Int. Cl.⁴: **B60R 25/06**

(30) Priorität: **30.10.85 DE 8530741 U**

(43) Veröffentlichungstag der Anmeldung:
**06.05.87 Patentblatt 87/19**

(84) Benannte Vertragsstaaten:
**AT DE FR GB IT**

(71) Anmelder: **Hettel, Bernd R.**
**Neuwiesenreben 6**
**D-7505 Ettlingen 7(DE)**
Anmelder: **Schnellberger, Reinhard**
**Yorckstrasse 61**
**D-7500 Karlsruhe 21(DE)**

(72) Erfinder: **Hettel, Bernd R.**
**Neuwiesenreben 6**
**D-7505 Ettlingen 7(DE)**
Erfinder: **Schnellberger, Reinhard**
**Yorckstrasse 61**
**D-7500 Karlsruhe 21(DE)**

(74) Vertreter: **Moser, Herbert, Dr.-Ing.**
**Nowackanlage 15**
**D-7500 Karlsruhe(DE)**

(54) **Diebstahlsicherung für ein Getriebe.**

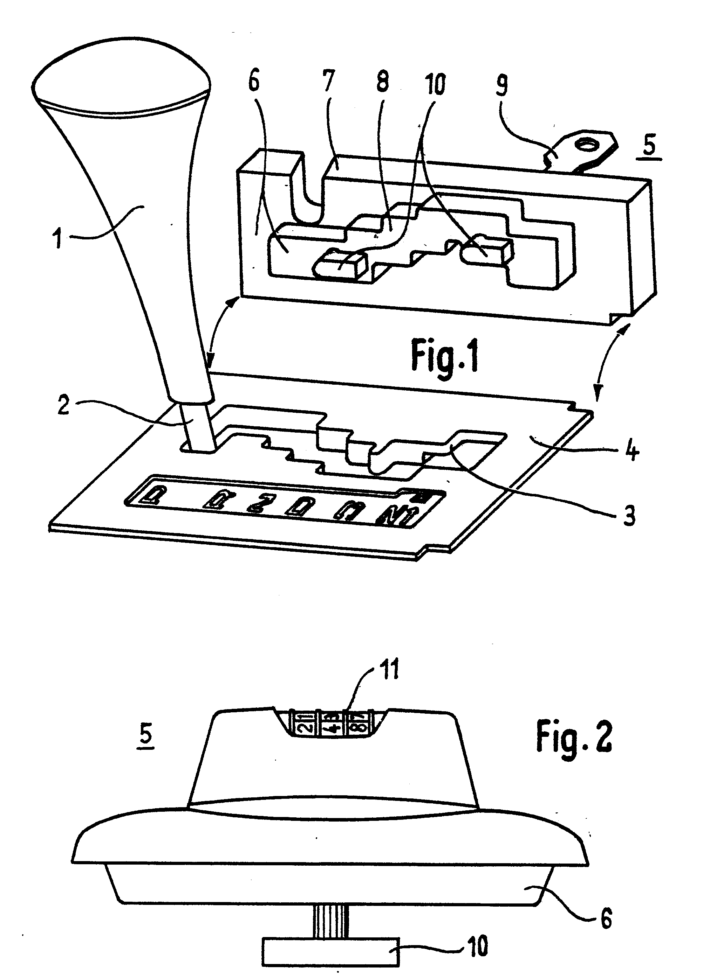

㉟ Eine Diebstahlsicherung für ein Getriebe mit Handschaltung, insbesondere für ein Automatik-Getriebe, bei dem die Schaltstange in einer Schlitzausnehmung einer Schaltgehäuseplatte geführt ist, soll so ausgebildet werden, daß eine einfache Nachrüstung und eine sichere Handhabung erzielt werden. Hierzu ist gemäß der Erfindung vorgesehen, daß eine abnehmbare Abdeckplatte (6,12) zur wenigstens teilweisen Abdeckung der Schlitzausnehmung (3) der Schaltgehäuseplatte (4) vorhanden und in der Schlitzausnehmung (3) mit mindestens einem bewegbaren Sperrelement (10) in Sperrlage blockierbar ist (Fig.1).

Fig.1

EP 0 220 672 A1

## Diebstahlsicherung für ein Getriebe

Die Erfindung betrifft eine Diebstahlsicherung für ein Getrebe mit Handschaltung, bei dem die Schaltstange in einer Schlitzausnehmung einer Schaltgehäuseplatte geführt ist.

Bekannte Diebstahlsicherungen für Kraftfahrzeuge sind entweder leicht überwindbar oder erfordern einen hohen Aufwand bei der Anbringung bzw. gefährden den Fahrer beim plötzlichen ungewollten Einrasten.

Die Erfindung geht von der Aufgabenstellung aus, eine Diebstahlsicherung für Getriebe mit Handschaltung der eingangs genannten Art, insbesondere für Automatik-Getriebe, zu schaffen, welche als Nachrüstteil ohne Einbauaufwand angebracht werden kann und bei der in der Freigabestellung jede Gefährdung durch unerwünschtes Einrasten ausgeschlossen ist.

Die Lösung dieser Aufgabenstellung erfolgt dadurch, daß eine abnehmbare Abdeckplatte zur wenigstens teilweisen Abdeckung der Schlitzausnehmung der Schaltgehäuseplatte vorgesehen und in der Schlitzausnehmung mit mindestens einem bewegbaren Sperrelement in Sperrlage blockierbar ist.

Eine solche Diebstahlsicherung wird in einfacher Weise auf die Schlitzausnehmung aufgelegt und gegen Abnehmen blockiert. Dadurch läßt sich die Schaltstange des Schalthebels nicht mehr aus ihrer vorgegebenen Ruhelage insbesondere aus der Park-Stellung bei Automatik-Getrieben, herausführen und ein Entwendungsversuch des Fahrzeugs scheitert. Nach dem Abnehmen der Abdeckplatte sind im Bereich der Schlitzausnehmung keine Teile vorhanden, welche den freien Bewegungsweg der Schaltstange zu irgendeinem Zeitpunkt hindern könnten.

Eine zweckmäßige Ausbildung kann vorsehen, daß an der Abdeckplatte eine der Schlitzausnehmung abschnittsweise angepaßte Eingriffsleiste vorgesehen ist, welche mit mindestens einem durch eine Schließvorrichtung bewegbaren Riegel in der Schlitzausnehmung blockierbar einsetzbar ist. Die Ausbildung der Eingriffsleiste und der Abdeckplatte wird zweckmäßig so gewählt, daß ein Einsetzen der Diebstahlsicherung nur dann möglich ist, wenn sich die Schaltstange des Schalthebels in einer bestimmungsgemäßen Gangstellung -bei Automatik-Getrieben in der Park-Stellung-befindet.

Anstelle eines einzigen, zur Blockierung dienenden Riegels können auch mehrere Riegel mit einer gemeinsamen oder einzeln zugeordneten Schließvorrichtung vorgesehen sein.

Die Schließvorrichtung ist zweckmäßig ein Zylinderschloß oder ein Zahlenschloß, welches keinen zusätzlichen Schlüssel benötigt.

Da im Bereich der Schlitzausnehmung bei verschiedenen Getrieben, insbesondere bei Automatik-Getrieben, eine relativ dünne Gangstellungsanzeigeleiste vorgesehen ist, deren Durchstoßen einen Zugang zum Beseitigen des bewegbaren Riegels ermöglichen würde, kann in einer Weiterbildung der Erfindung die Größe der Abdeckplatte so gewählt sein, daß zusätzlich zur Schlitzausnehmung die Gangstellungsanzeigeleiste abgedeckt wird.

Durch die Merkmale der Erfindung ergibt sich eine einfach aufgebaute und sehr wirksame Diebstahlsicherung, die bevorzugt bei Knüppelschaltungen, aber auch bei Lenkradschaltungen in entsprechender Anpassung angewendet werden kann.

In der Zeichnung sind Ausführungsbeispiele der Erfindung näher erläutert; es zeigen:

Fig. 1 eine isometrische Ansicht der Diebstahlsicherung in Verbindung mit der Schaltgehäuseplatte,

Fig. 2 eine alternative Ausbildung der Diebstahlsicherung mit Zahlenschloß,

Fig. 3 eine alternative Ausbildung der Diebstahlsicherung mit vergrößerter Abdeckplatte.

In Fig. 1 ist ein Schalthebel 1 eines Automatik-Getriebes erkennbar, welcher mit einer Schaltstange 2 in einer Schlitzausnehmung 3 einer Schaltgehäuseplatte 4 entsprechend der Kulissenführung verschiebbar ist.

Die Diebstahlsicherung 5 besteht aus einer abnehmbaren Abdeckplatte 6, welche eine Aussparung 7 zur Aufnahme der Schaltstange 2 in der Parkposition aufweist.

An der Unterseite der Abdeckplatte 6 befindet sich eine der Schlitzausnehmung 3 abschnittsweise angepaßte Eingriffsleiste 8, an der ein nicht sichtbares Zylinderschloß mit Schlüssel 9 zwei bewegbare Riegel 10 steuert. Beim Einsetzen der Diebstahlsicherung 5 untergreifen die Riegel 10 die Schlitzausnehmung 3 und sperren somit den Schalthebel 1 in der Parkposition.

In der Ausführungsform nach Fig. 2 ist anstelle eines Zylinderschlosses 9 ein Zahlenschloß 11 vorgesehen. Die übrigen Teile entsprechen sinngemäß der Ausführung nach Fig. 1.

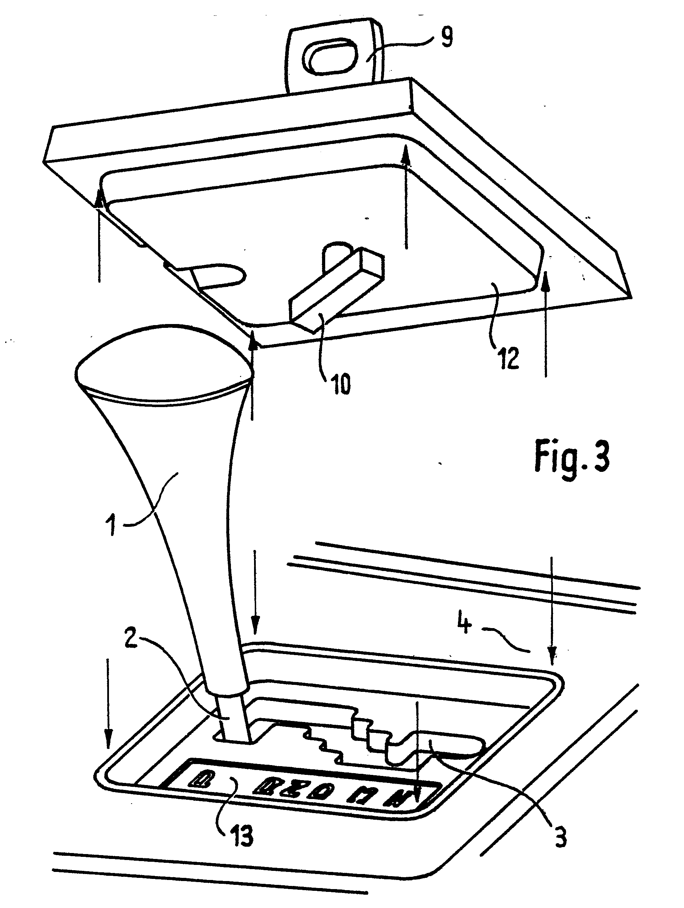

Fig. 3 zeigt eine alternative Ausbildung, bei der die Abdeckplatte 12 so groß gewählt ist, daß sie beim Ein setzen des Riegels 10 in die Schlitzausnehmung 3 der Schaltgehäuseplatte 4 auch die Gangstellungsanzeigeleiste 13 abdeckt. Eine Eingriffsleiste zum Eingreifen in die Schlitzausnehmung 3 ist hierbei nicht vorhanden, jedoch wird die flach aufliegende Abdeckplatte 12 durch einen vom Zylinderschloß 9 gesteuerten, besonders kräftigen Riegel 10 in der Blockierstellung in der Schlitzausnehmung 3 festgehalten.

Anstelle einer direkten mechanischen Kopplung zwischen einem Zylinderschloß und dem bewegbaren Riegel kann auch gegebenenfalls zweckmäßig eine elektronische Fernsteuerung unter Verwendung bekannter elektronischer Bauelemente angewendet werden. Es ist ferner auch die direkte oder indirekte Verbindung zwischen dem Riegelantrieb und einem elektronischen Zahlenschloß möglich.

**Ansprüche**

1. Diebstahlsicherung für ein Getriebe mit Handschaltung, bei dem die Schaltstange in einer Schlitzausnehmung einer Schaltgehäuseplatte geführt ist, **dadurch gekennzeichnet**, daß eine abnehmbare Abdeckplatte (6,12) zur wenigstens teilweisen Abdeckung der Schlitzausnehmung (3) der Schaltgehäuseplatte (4) vorgesehen und in der Schlitzausnehmung (3) mit mindestens einem bewegbaren Sperrelement (10) in Sperrlage blockierbar ist.

2. Diebstahlsicherung nach Anspruch 1, **dadurch gekennzeichnet**, daß an der Abdeckplatte (6) eine der Schlitzausnehmung (3) abschnittsweise angepaßte Eingriffsleiste (8) vorgesehen ist, welche mit mindestens einem durch eine Schließvorrichtung (9) bewegbaren Riegel (10) in der Schlitzausnehmung (3) blockierbar einsetzbar ist.

3. Diebstahlsicherung nach Anspruch 2, **dadurch gekennzeichnet**, daß die Schließvorrichtung ein Zylinderschloß (9) ist.

4. Diebstahlsicherung nach Anspruch 2, **dadurch gekennzeichnet**, daß die Schließvorrichtung ein Zahlenschloß (11) ist.

5. Diebstahlsicherung nach Anspruch 1, **dadurch gekennzeichnet**, daß die Größe der Abdeckplatte (12) so gewählt ist, daß zusätzlich zur Schlitzausnehmung (3) die Gangstellungsanzeigeleiste (13) abgedeckt wird.

6. Diebstahlsicherung nach Anspruch 1, **dadurch gekennzeichnet**, daß das bewegbare Sperrelement (10) elektronisch fernsteuerbar ist.

0 220 672

# Fig.1

# Fig. 2

Neu eingereicht / Newly filed
Nouvellement déposé

EU 986

Fig. 3

EU 986

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 327 590 (RINDFLEISCH) <br> * Insgesamt * | 1-4 | B 60 R 25/06 |
| Y | | 6 | |
| Y | FR-A-2 303 332 (ROY) <br> * Ansprüche 1,4,5 * | 6 | |
| X | FR-A- 794 918 (MARGERIE) <br> * Insgesamt * | 1-3 | |
| X | DE-C- 422 416 (WEISSE) <br> * Insgesamt * | 1,5 | |
| X | FR-A- 859 309 (JAEGER AVIATION) <br> * Insgesamt * | 1 | RECHERCHIERTE SACHGEBIETE (Int. Cl.4) |
| A | | 3 | B 60 R |
| X | FR-A- 843 268 (TEULADE) <br> * Insgesamt * | 1 | |
| A | | 3 | |

Der vorliegende Recherchenbericht wurde für alle Patentansprüche erstellt.

| Recherchenort | Abschlußdatum der Recherche | Prüfer |
|---|---|---|
| DEN HAAG | 09-02-1987 | DUBOIS B.F.J. |